Europäisches Patentamt

European Patent Office

Office européen des brevets

(11) Veröffentlichungsnummer: **0 465 780 A1**

## (12) EUROPÄISCHE PATENTANMELDUNG

(21) Anmeldenummer: **91106735.3**

(22) Anmeldetag: **25.04.91**

(51) Int. Cl.5: **A23L 3/36, A23L 3/3418, A23L 3/375**

(30) Priorität: **13.07.90 DE 4022311**

(43) Veröffentlichungstag der Anmeldung:
**15.01.92 Patentblatt 92/03**

(84) Benannte Vertragsstaaten:
**AT BE CH DK ES FR GB GR IT LI LU NL SE**

(71) Anmelder: **KOHLENSÄURE-WERKE RUD. BUSE GMBH & CO.**
**Sprudelstrasse**
**W-5462 Bad Hönningen(DE)**

(72) Erfinder: **Corinth, Hans-Gerd, Dipl.-Ing.**
**Ringstrasse 63**
**W-5462 Bad Hönningen(DE)**

(74) Vertreter: **Münzhuber, Robert, Dipl.-Phys. et al**
**Patentanwalt Rumfordstrasse 10**
**W-8000 München 5(DE)**

(54) Verfahren und Einrichtung zum Frosten mittels Kohlendioxyd.

(57) Bei einem Verfahren zum Frosten von insbesondere Nahrungsmitteln mittels Kohlendioxid wird das zu frostende Gut auf einem Transportband (11) durch einen langgestreckten Tunnel (10) hindurchgeführt, in den Tunnel intermittierend flüssiges Kohlendioxid expandiert und das entstehende Kohlendioxid-Gas abgesaugt. Zur Verringerung des Verbrauchs an flüssigem Kohlendioxidgas wird die Absaugung an die Menge an jeweils anfallendem Kohlendioxidgas angepaßt, derart, daß während der Sprühpausen weniger Gas abgesaugt wird, als während der Sprühperioden. Eine Einrichtung zur Durchführung des Verfahrens weist dabei in den Absaugschächten eine motorisch verstellbare Klappe (15) auf, die den Absaugquerschnitt in Abhängigkeit von der Tätigkeit der Sprühdüsen (12) verändert.

EP 0 465 780 A1

Die Erfindung betrifft ein Verfahren zum Frosten von insbesondere Nahrungsmitteln mittels Kohlendioxid sowie eine Einrichtung zur Durchführung eines solchen Verfahrens.

Ein bekanntes Verfahren zum Frosten von vorzugsweise Nahrungsmitteln besteht darin, daß das zu frostende Gut auf einem Transportband durch einen langgestreckten, im wesentlichen geschlossenen Tunnel hindurchgeführt wird, wobei an der Tunneldecke in bestimmten Abständen Sprühdüsen angeordnet sind, die jeweils über ein Auf-Zu-Ventil an eine Quelle für flüssiges Kohlendioxid angeschlossen sind und bei geöffnetem Ventil flüssiges Kohlendioxid in den Tunnel-Innenraum expandieren. Ein Teil des flüssigen Kohlendioxids geht dabei sofort in den gasförmigen Zustand über, wohingegen der andere Teil in den festen Zustand übergeht, also in Kohlensäureschnee, der dann mehr oder minder langsam zu Kohlendioxidgas sublimiert. Bei der Sublimation des Kohlensäureschnees wird der Umgebung bekanntlich Wärme entzogen, so daß dann, wenn der Einsprühvorgang unterbrochen wird, noch für eine gewisse Zeitspanne eine starke Kühlwirkung gegeben ist. Aus diesem Grund ist es bei diesen Froster-Tunneln nicht erforderlich, fortlaufend Kohlendioxid einzuführen, vielmehr wird der Einbringvorgang intermittierend durchgeführt, d.h., es erfolgen nacheinander abwechselnd Sprühperioden und -pausen. An dieser Stelle sei bemerkt, daß der hier der Einfachheit halber verwendete Ausdruck "Sprühperiode" den tatsächlichen physikalischen Gegebenheiten nicht exakt entspricht; das an der Düsenmündung ankommende flüssige Kohlendioxid expandiert in den Innenraum des Tunnels und geht dabei sofort teilweise in den gasförmigen, teilweise in den festen Zustand über, ohne daß es zur Bildung "flüssiger Sprühstrahlen" kommt. Das in diesen "Sprühperioden" durch Verdampfen flüssigen Kohlendioxids und in den Sprühpausen durch Sublimation von festem Kohlendioxid entstehende Kohlendioxidgas muß selbstverständlich abgeführt werden, zu welchem Zweck Abluftventilatoren und Absaugleitungen vorgesehen sind, wobei zumindest vom Anfang und vom Ende der Tunnelstrecke Absaugleitungen abgehen. Die Absaugleitungen sind dabei meist mit Klappen versehen, mit deren Hilfe der Absaugquerschnitt veränderbar ist; diese Klappen werden vorab manuell so eingestellt, daß für den jeweiligen Froster-Tunnel gewährleistet ist, daß auch während der Sprühperioden mit starker Gaserzeugung kein Kohlendioxidgas in den Aufstellungsraum strömt, wobei dann dieser Absaugquerschnitt über die gesamte Betriebszeit des Froster-Tunnels beibehalten bleibt, also auch während der weniger Gas erzeugenden Sprühpausen durch Sublimation entstehenden, vergleichsweise geringeren Kohlendioxid-Gasmengen sehr schnell aus dem Tunnelinneren abgezogen werden, ihre Kühlfähigkeit also nicht voll ausgenutzt wird. Die Folge ist, daß die Sprühpausen vergleichsweise kurz bemessen werden müssen, was über die gesamte Betriebszeit des Froster-Tunnels gesehen, einen hohen Verbrauch an flüssigem Kohlendioxid mit sich bringt.

Aufgabe der vorliegenden Erfindung ist deshalb, ein Verfahren und eine Einrichtung zu schaffen, mit deren Hilfe die Frosterwirkung verbessert und damit der Verbrauch von flüssigem Kohlendioxid vermindert wird. Die Lösung dieser Aufgabe ergibt sich verfahrensmäßig aus den kennzeichnenden Merkmalen des Patentanspruchs 1, vorrichtungsmäßig aus den kennzeichnenden Merkmalen des Patentanspruches 5. Bei der Erfindung wird also der Tatsache Rechnung getragen, daß während der Sprühpausen wesentlich weniger Kohlendioxidgas in der Zeiteinheit anfällt, als während der Sprühperioden und deshalb während der Sprühpausen mit einer geringeren bzw. schwächeren Absaugung auszukommen ist. Dem wird nun in der Weise Rechnung getragen, daß die erwähnten Klappen in den Absaugleitungen motorisch verstellbar ausgebildet werden, wobei die Verstellmotore simultan mit dem Schalten der Sprühdüsen-Ventile gesteuert werden, derart, daß beim Öffnen der Ventile (Beginn der Sprühperiode) die Klappen in eine, einem vergleichsweisen großen Absaugquerschnitt entsprechende Stellung bewegt werden, beim Schließen der Ventile (Beginn der Sprühpause) in eine, einem vergleichsweisen kleinen Absaugquerschnitt entsprechende Stellung. Damit ist einerseits gewährleistet, daß weder während der Sprühperioden noch während der Sprühpausen Kohlendioxidgas in den Aufstellungsraum dringt, andererseits aber ist die Absaugung während der Sprühpausen dem dabei geringeren Kohlendioxidgas-Anfall angepaßt, so daß die Froster-Wirkung voll genutzt wird. Messungen haben ergeben, daß auf diese Weise der Verbrauch an flüssigem Kohlendioxid beträchtlich vermindert wird.

In den Unteransprüchen sind besonders zweckmäßige Weiterbildungen der Erfindung gekennzeichnet.

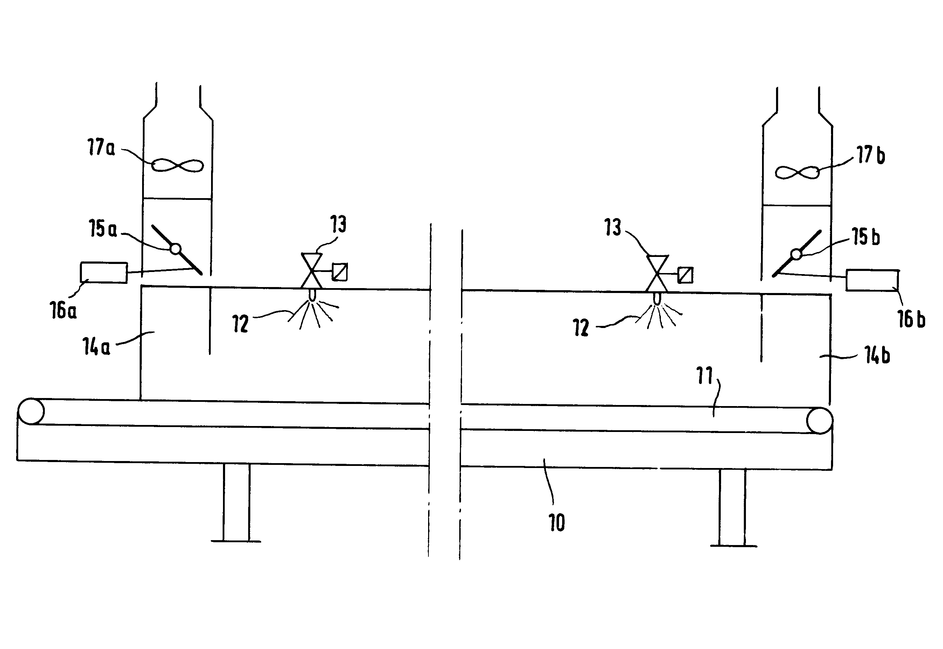

Auf der Zeichnung ist schematisch eine erfindergemäße Einrichtung dargestellt, und zwar zeigt die einzige Figur den Froster-Tunnel in Seitenansicht, wobei der Mittelteil weggeschnitten ist.

Auf der Zeichnung ist mit 10 ein Froster-Tunnel bezeichnet, der von einem Transportband 11 für das zu frostende Gut durchlaufen wird. In gleichmäßigen Abständen befinden sich an der Tunnel-Decke Sprühdüsen 12, die über Auf-Zu-Ventile 13 an eine nicht gezeichnete Quelle für flüssiges Kohlendioxid angeschlossen sind. Am Anfang und am Ende des Tunnels 10 ist jeweils ein Absaugschacht 14a, 14b vorgesehen, in dem eine Verstellklappe 15a bzw. 15b untergebracht ist, die über eine pneumatische Kolben-Zylinder-Einheit 16a bzw. 16b verstellt werden kann und dabei den Absaugquerschnitt verändert. Mit 17a, 17b, sind Abluftventilatoren bezeichnet.

Die Einrichtung arbeitet folgendermaßen: Vorab werden für die Verstellklappen 15a, 15b, zwei Stellpositionen festgelegt, eine Stellposition, entsprechend einem größeren Absaugquerschnitt, für die Sprühperioden und eine Stellposition, entsprechend kleinerem Absaugquerschnitt, für die Sprühpausen. Wird nun der Froster-Tunnel in Betrieb genommen und das Transportband 11 in Bewegung gesetzt, dann werden zunächst nichtgezeichnete Steuerleitungen und Verstellmotoren durch die Sprühdüsen-Ventile 13 geöffnet und zugleich die Klappen 15a, 15b durch die Einheiten 16a, 16b in eine diesem größeren Absaugquerschnitt entsprechende Position gebracht. Nach einer gewünschtest Zeit werden dann die Sprühdüsen-Ventile 13 geschlossen und zugleich mittels der Einheiten 16a, 16b die Klappen 15a, 15b in die dem kleineren Absaugquerschnitt entsprechende Position gebracht. Dieser Vorgang wiederholt sich bei jedem Übergang von Sprühperiode zu Sprühpause bzw. umgekehrt.

Die obige Beschreibung betrifft verständlicherweise nur das Grundprinzip der Erfindung. So ist beispielsweise vorausgesetzt worden, daß die Sprühperioden und Sprühpausen aller Sprühdüsen 12 gleichzeitig ablaufen, was jedoch nicht der Fall sein muß. So ist es beispielsweise möglich, den eingangsseitigen Sprühdüsen des Tunnels 10 eine längere Sprühperiode zuzuordnen, als den ausgangsseitigen Sprühdüsen, um so beim ankommenden Gut eine Schockfrostung zu erreichen. In diesem Fall wird dann die eingangsseitige Klappe 15a, mit den Ventilen 13 der ausgangsseitigen Sprühdüsen 12 geschaltet, die ausgangsseitige Klappe 15b mit den Ventilen 13 der ausgangsseitigen Sprühdüsen 12. Weiterhin können mehr als die beiden dargestellten Absaugschächte 14a, 14b vorgesehen sein; ordnet man beispielsweise jeder Sprühdüse 12 einen ihr benachbarten Absaugschacht mit Verstellklappe zu, dann werden die entsprechenden Sprühdüsen - Absaugschacht - Paare gleichzeitig geschaltet. Wenn dabei hier immer von Gleichzeitigkeit gesprochen worden ist, dann ist darunter nicht eine völlig exakte Gleichzeitigkeit zu verstehen. So kann es durchaus vorteilhaft sein, wenn etwa beim Schließen des Sprühdüsen-Ventils 13 die Umschaltung der zugeordneten Verstellklappe 15 erst mit einer kleinen Zeitverzögerung erfolgt, um sicher zu stellen, daß die am Ende der Sprühperiode entstandene Gasmenge zufriedenstellend abgeführt wird; im allgemeinen genügt aber die Zeitverzögerung, die sich aus der Verstellzeit der Klappe zwangsläufig ergibt.

Die erläuterte Zweipunkt-Verstellung der Klappen kann aber auch "verfeinert" werden, etwa dahingehend, daß im Tunnel 10 Druckfühler angebracht werden, welche die Klappen bzw. deren Verstellmotoren in Abhängigkeit vom Druck bzw. Unterdruck im Tunnelinneren feinsteuern, also dafür sorgen, daß stets nur soviel Kohlendioxid-Gas abgesaugt wird, wie notwendig ist, um ein Ausströmen von Kohlendioxidgas in den Aufstellungsraum zu verhindern. Solche Druckfühler können aber auch lediglich als Sicherheitselemente eingesetzt werden, die im Fall eines, aus welchen Gründen auch immer, entstehenden Überdrucks im Tunnel 10 die Sprühdüsenventile schließen und die Klappen auf volle Absaugung stellen. Schließlich kann an Stelle der Klappenverstellung auch eine Verstellung der Ventilatordrehzahl erfolgen.

**Patentansprüche**

1. Verfahren zum Frosten von insbesondere Nahrungsmitteln mittels Kohlendioxid, bei dem das zu frostende Gut auf einem Transportband durch einen langgestreckten, im wesentlichen geschlossenen Tunnel hindurchgeführt, in den Tunnel flüssiges Kohlendioxid intermittierend expandiert und das entstehende Kohlendioxidgas aus dem Tunnel abgesaugt wird, dadurch gekennzeichnet, daß die Absaugmenge an Kohlendioxidgas in Abhängigkeit von der jeweils entstehenden Menge an Kohlendioxidgas verändert wird, derart, daß während der Sprühpausen weniger Kohlendioxidgas abgesaugt wird als während der Sprühperioden.

2. Verfahren nach Anspruch 1, dadurch gekennzeichnet, daß der Absaugquerschnitt oder der Saugdruck in Abhängigkeit vom Öffnen bzw. Schließen der Sprühdüsen verändert wird.

3. Verfahren nach Anspruch 2, dadurch gekennzeichnet, daß der Sprühperiode und der Sprühpause jeweils ein fester Absaugquerschnitt vorab zugeordnet wird.

4. Verfahren nach einem der Ansprüche 1 bis 3, dadurch gekennzeichnet, daß der Druck im Tunnel-Inneren fortlaufend gemessen und zur Veränderung des Absaugquerschnittes herangezogen wird.

5. Einrichtung zur Durchführung des Verfahrens nach einem der Ansprüche 1 - 4, mit einem langgestreckten, im wesentlichen geschlossenen Froster-Tunnel, über den Tunnel gleichmäßig verteilten Sprühdüsen, die über Auf-Zu-Ventile mit einer Quelle für flüssiges Kohlendioxid verbunden sind, und mit Abluftventilatoren bestückten Absaugschächten, in denen Verstellklappen angeordnet sind, gekennzeichnet durch den Verstellklappen (15a, 15b) und/oder den Ventilatoren (17a, 17b) zugeordnete Verstellmotoren (16a, 16b) oder Kolben-Zylinder-Einheiten, die von den die Sprühdüsenventile (13) schaltenden Steuerelementen schaltbar sind.

6. Einrichtung nach Anspruch 5, gekennzeichnet durch im Tunnel (10) angeordnete Druckfühler zum Steuern der Verstellmotoren (16a, 16b) oder Kolben-Zylinder- Einheiten.

# EUROPÄISCHER RECHERCHENBERICHT

**EP 91 10 6735**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 701 913 (L'AIR LIQUIDE S.A.)<br>* Ansprüche 1-4 *<br>– – – | 1,5 | A 23 L 3/36<br>A 23 L 3/3418<br>A 23 L 3/375 |
| A | FR-A-2 388 509 (L'AIR LIQUIDE S.A.)<br>* Ansprüche 1-9 *<br>– – – | 1 | |
| A | US-A-4 852 358 (A. ACHARYA et al.)<br>* Ansprüche 1-12 *<br>– – – – – | 1,5 | |

**RECHERCHIERTE SACHGEBIETE (Int. Cl.5)**

A 23 L 3/00

**Der vorliegende Recherchenbericht wurde für alle Patentansprüche erstellt**

| Recherchenort | Abschlußdatum der Recherche | Prüfer |
|---|---|---|
| Berlin | 12 September 91 | SCHULTZE D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument